(19) Europäisches Patentamt
European Patent Office
Office européen des brevets

(11) **EP 4 332 821 A1**

(12) **EUROPEAN PATENT APPLICATION**
published in accordance with Art. 153(4) EPC

(43) Date of publication:
**06.03.2024 Bulletin 2024/10**

(21) Application number: **21941589.0**

(22) Date of filing: **13.09.2021**

(51) International Patent Classification (IPC):
**G06F 30/3947** (2020.01)      **G06F 30/398** (2020.01)
**G06N 3/00** (2023.01)

(52) Cooperative Patent Classification (CPC):
Y02E 60/60

(86) International application number:
**PCT/CN2021/117926**

(87) International publication number:
**WO 2022/237022 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.05.2021 CN 202110517868**

(71) Applicants:
• **Electric Power Research Institute.
China Southern Power Grid
Guangzhou, Guangdong 510663 (CN)**
• **China Southern Power Grid
Guangzhou, Guangdong 510670 (CN)**

(72) Inventors:
• **LI, Huan
Guangzhou, Guangdong 510663 (CN)**
• **FU, Chuang
Guangzhou, Guangdong 510663 (CN)**
• **XU, Shukai
Guangzhou, Guangdong 510663 (CN)**
• **ZHAO, Xiaobin
Guangzhou, Guangdong 510663 (CN)**
• **XIN, Qingming
Guangzhou, Guangdong 510663 (CN)**

(74) Representative: **von Hirschhausen, Helge
Grosse - Schumacher -
Knauer - von Hirschhausen
Patent- und Rechtsanwälte
Nymphenburger Straße 14
80335 München (DE)**

(54) **DESIGN METHOD AND SYSTEM FOR DIRECT-CURRENT LOOP IMPEDANCE**

(57)    Provided are a design method and system for a direct-current loop impedance. An optimal direct-current loop impedance is obtained by means of direct calculation by a mathematical model, such that tedious modeling and simulation time in electromagnetic transient software is reduced, thereby improving the calculation efficiency; by means of the design method, global solving is performed in a feasible region of system parameters, and the obtained optimal system parameter and direct-current loop impedance are results which most meet an optimization goal when the system is stable, such that a situation of there possibly being inconsideration or unthorough optimization in manual iterative design, etc., is avoided, and therefore the precision of direct-current loop impedance design is higher; and furthermore, parameterized parsing and optimization design can be performed on a direct-current loop impedance according to different optimization design goals, such that there is no need to perform repeat targeted adjustment and iteration on the system parameters by a professional designer, thereby reducing manpower and time, and solving the technical problems of existing design methods for a direct-current loop impedance having relatively low efficiency and relatively poor precision.

```
┌─────────────────────────────────────────────────────┐
│ Establish an impedance model of a DC loop of an HVDC │──101
│ system                                               │
└─────────────────────────────────────────────────────┘
                          ↓
┌─────────────────────────────────────────────────────┐
│ Scan parameters in the HVDC system based on the      │──102
│ impedance model, to obtain a feasible region of each │
│ of the parameters                                    │
└─────────────────────────────────────────────────────┘
                          ↓
┌─────────────────────────────────────────────────────┐
│ Substitute, for each of the parameters, the          │──103
│ parameter in the feasible region into a DC loop       │
│ impedance equation, to obtain an impedance           │
│ corresponding to the parameter, the DC loop          │
│ impedance equation being obtained by transforming    │
│ the impedance model                                  │
└─────────────────────────────────────────────────────┘
                          ↓
┌─────────────────────────────────────────────────────┐
│ Comparing, for each of the parameters, the impedance │──104
│ corresponding to the parameter with a target          │
│ impedance value, and determining an impedance that   │
│ meet the target impedance value and the corresponding│
│ parameter as an optimal impedance and an optimal     │
│ parameter of the DC loop                             │
└─────────────────────────────────────────────────────┘
```

**Figure 1**

EP 4 332 821 A1

## Description

**FIELD**

This application relates to the technical field of integrated design of high-voltage direct current (HVDC) transmission projects, and in particular to a method and a system for designing DC loop impedance.

**BACKGROUND**

High-voltage direct current (HVDC) transmission technologies have played a major role in power transmission and clean energy consumption, and have been widely used. The safe and stable operation of HVDC projects has an increasing impact on the power grid. An HVDC system contains nonlinear components such as thyristor semiconductor switches, which cause harmonics on the AC and DC sides of the HVDC system. Therefore, a long DC line or a control system that does not match the primary system will cause system resonance at a certain frequency, endangering equipment safety and even causing DC fault lockout and affect the normal operation of DC in serious cases. Therefore, the DC loop impedance of the HVDC project needs to be reasonably designed to avoid the risk of resonance in the DC system and ensure the stable operation of the power grid.

In conventional projects, DC link impedance is designed manually using iteration methods, mainly relying on professionals with rich engineering experience to use professional simulation software and other tools to simulate and calculate the operating conditions of DC projects. If resonance occurs, engineers adjust relevant parameters based on experience to eliminate resonance, and then manually iterate the relevant parameters until there is no risk of resonance in all simulation conditions, then the parameter iteration and design are completed. This method can better avoid the risk of DC resonance, but requires higher engineering experience of designers, and involves long simulation time and low efficiency.

**SUMMARY**

A method and a system for determining a DC loop impedance are provided according to the present disclosure to solve the technical problem of low efficiency and low accuracy of the existing DC loop impedance design method.

In view of the above, a method for determining a direct current (DC) loop impedance is provided according to a first aspect of the present disclosure, which includes:

establishing an impedance model for a DC loop of a high-voltage direct current (HVDC) system;

scanning parameters in the HVDC system based on the impedance model, to obtain a feasible region of each of the parameters;

substituting, for each of the parameters, the parameter in the feasible region into a DC loop impedance equation, to obtain an impedance corresponding to the parameter, the DC loop impedance equation being obtained by transforming the impedance model; and

comparing, for each of the parameters, the impedance corresponding to the parameter with a target impedance value, and determining the impedance that meets the target impedance value and the parameter corresponding to the impedance as an optimal impedance and an optimal parameter of the DC loop.

In an embodiment, after the establishing an impedance model for a DC loop of an HVDC system, the mothed further includes:
selecting the parameters in the HVDC system by using a particle algorithm or a genetic evolutionary algorithm.

In an embodiment, the establishing an impedance model for a DC loop of an HVDC system includes:
establishing a state space equation associated with a primary system and a secondary control system of the HVDC system based on a structure of the HVDC system.

In an embodiment, the scanning parameters in the HVDC system based on the impedance model, to obtain a feasible region of each of the parameters includes:
scanning, by using an eigenvalue analysis method or impendence analysis method, the parameters in the HVDC system based on the impedance model, to obtain the feasible region of each of the parameters.

In an embodiment, the state space equation is expressed as:

$$\frac{dX}{dt} = AX + BU,$$

where X represents a state variable matrix for all energy-storage elements in the HVDC system, X has a dimension of n, and elements in X comprises a capacitor voltage and an inductor current, and where A represents a state matrix for the HVDC system, B represents an input matrix for the HVDC system, and U represents an input variable matrix for the HVDC system.

In an embodiment, the DC loop impedance equation is expressed as:

$$Z_{dcn\,0} = \frac{sI - A}{B}(n_0),$$

where s represents a Laplacian operator, A represents a state matrix of the HVDC system, and B represents an input matrix of the HVDC system.

A system for determining a direct current (DC) loop impedance is provided according to a second aspect of the present disclosure, which includes:

an establishment unit configured to establish an impedance model for a DC loop of a high-voltage direct current (HVDC) system;
a scanning unit configured to scan parameters in the HVDC system based on the impedance model, to obtain a feasible region of each of the parameters;
a calculation unit configured to, for each of the parameters, substitute the parameter in the feasible region into a DC loop impedance equation, to obtain an impedance corresponding to the parameter, the DC loop impedance equation being obtained by transforming the impedance model; and
a comparison unit, configured to, for each of the parameters, compare the impedance corresponding to the parameter with a target impedance value, and determine the impedance that meets the target impedance value and the parameter corresponding to the impedance as an optimal impedance and an optimal parameter of the DC loop.

In an embodiment, the system further includes a selection unit configured to:
select the parameters in the HVDC system by using a particle algorithm or a genetic evolutionary algorithm.

In an embodiment, the establishment unit is configured to:
establish a state space equation associated with a primary system and a secondary control system of the HVDC system based on a structure of the HVDC system.

In an embodiment, the scanning unit is configured to:
scan, by using an eigenvalue analysis method or impendence analysis method, the parameters in the HVDC system based on the impedance model, to obtain the feasible region of each of the parameters.

As can be seen from the above technical solutions, the present disclosure has the following advantages.

A method for determining a DC loop impedance is provided according to the present disclosure, which includes: establishing an impedance model for a DC loop of an HVDC system; scanning parameters in the HVDC system based on the impedance model, to obtain a feasible region of each of the parameters; for each of the parameters, substituting the parameter in the feasible region into a DC loop impedance equation, to obtain an impedance corresponding to the parameter, the DC loop impedance equation being obtained by transforming the impedance model; and comparing the impedance corresponding to the parameter with a target impedance value, and determining the impedance that meets the target impedance value and the parameter corresponding to the impedance as an optimal impedance and an optimal parameter of the DC loop.

With the method for determining a DC loop impedance of the present disclosure, the DC loop impedance does not need to be designed through electromagnetic transient simulation such as PSCAD, but is directly calculated through mathematical models, eliminating the lengthy modeling and simulation time required by electromagnetic transient software, and improving the calculation efficiency. In addition, and the method of the present disclosure is to perform a global solution within the feasible regions of the system parameters. The optimal system parameters and DC loop impedance are obtained while meeting the optimization goals under the premise of system stability, avoiding insufficient consideration or insufficient optimization in manual iterative design. Therefore, the obtained DC loop impedance has higher accuracy. Further, the present disclosure provides parametric analytical optimization design of the DC loop impedance according to different optimization design goals, and the optimization process can be performed automatically through computers, without the need for professional designers to repeatedly adjust and iterate system parameters, saving manpower and time, thus solving the problem of low efficiency and low accuracy of existing DC loop impedance design methods.

**BRIEF DESCRIPTION OF THE DRAWINGS**

Figure 1 is a flow chart of a method for determining a DC loop impedance according to a first method embodiment of the present disclosure;

Figure 2 is a flow chart of a method for determining a DC loop impedance according to a second method embodiment of the present disclosure;

Figure 3 is a schematic structural diagram of a system for determining a DC loop impedance according to an embodiment of the present disclosure;

Figure 4 is a schematic structural diagram of a typical HVDC system according to the present disclosure;

Figure 5 is a diagram showing an initial impedance spectrum of a DC loop impedance at an output of a rectifier side of an HVDC transmission system according to the present disclosure;

Figure 6 illustrates feasible ranges of system parameters Kpr and Kir of an HVDC transmission system according to the present disclosure; and

Figure 7 illustrates a comparison between an initial impedance curve and an impedance curve optimized by using the method according to the present disclosure.

## DETAILED DESCRIPTION OF EMBODIMENTS

In order to make those skilled in the art better understand the solutions of the present disclosure, the technical solution according to the embodiments of the present disclosure will be described clearly and completely as follows in conjunction with the drawings. It is apparent that the described embodiments are only a few rather than all of the embodiments according to the present disclosure. Any other embodiments obtained by those skilled in the art based on the embodiments in the present disclosure without any creative work fall in the scope of the present disclosure.

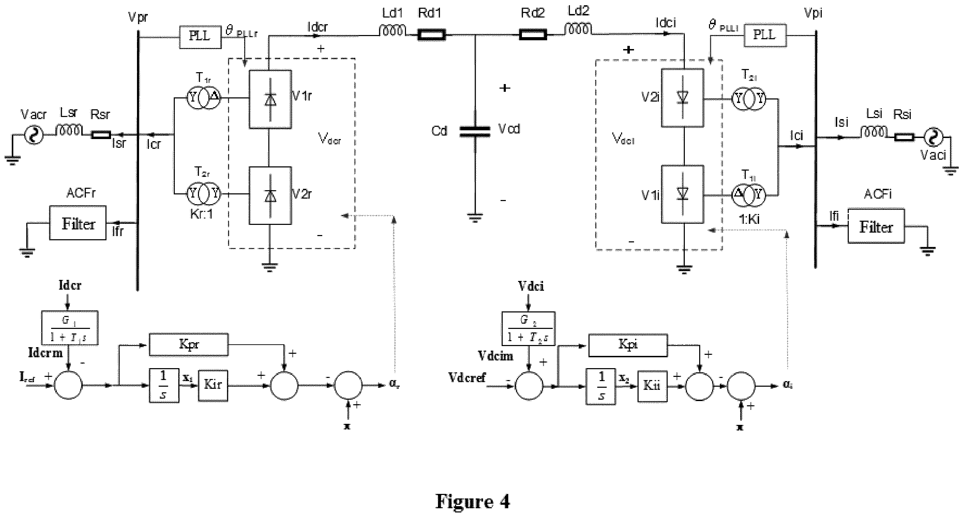

Reference is made to Figure 4, which is a schematic structural diagram of a typical HVDC system according to the present disclosure.

Figure 4 shows a schematic diagram of a typical HVDC system, which includes three parts: a rectifier side, an inverter side and a DC line. The rectifier side has a similar structure to the inverter side, and includes: an alternative current (AC) power grid, a converter transformer, a converter valve, an AC filter and a control system. The AC power grid is a Thevenin equivalent circuit, including an AC voltage source Vac, an internal resistor Rs and an internal inductor Ls that are connected in series. The converter transformer includes two converter transformers T1 and T2. The AC filter includes a capacitor, an inductor and a resistor that are connected in series or in parallel. The rectifier side of the control system is controlled by a constant current PI controller, and the inverter side is controlled by a constant voltage PI controller. The DC line shown in Figure 4 is a T-shaped circuit, and may be equivalent to a cascaded $\pi$-shaped circuit according to the length of the line.

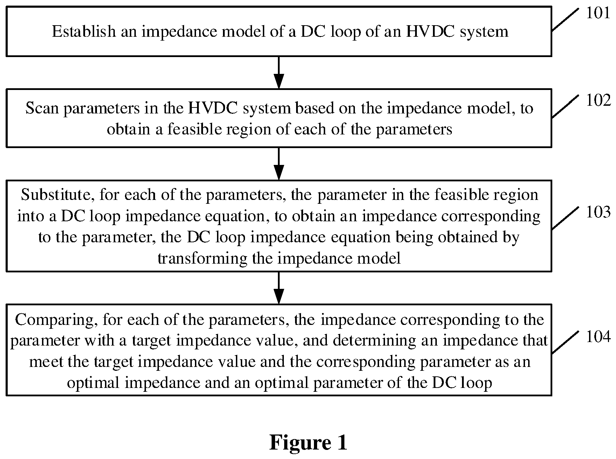

Reference is made to Figure 1, which is a flow chart of a method for determining a DC loop impedance according to a first method embodiment of the present disclosure.

The method for determining a DC loop impedance according to this embodiment includes the following steps 101 to 104.

In step 101, an impedance model of a DC loop of an HVDC system is established.

It should be noted that initialization is performed before establishing the impedance model. The initialization includes determining an input matrix according to the structure of the HVDC system and initializing relevant parameters.

In an embodiment, the method of establishing the impedance model for the DC loop of the HVDC system includes: establishing a state space equation associated with a primary system and a secondary control system of the HVDC system based on a structure of the HVDC system, where a small-signal model for a thyristor converter valve is established by using a switching function method, the delay effect of the switching period during 12-pulse operation of the thyristor in a triggering control operation is approximated by using Taylor expansion approximation or Pade approximation may be used to simulate the above delay effect. The PI controller, measurement delay, and controller delay, etc. in the control system are taken into consideration, where the measurement delay and the controller delay are simulated by using first-order Taylor expansion approximation or Pade approximation.

Based on the above factors, the state space equation of the system is expressed as the following equation:

$$\frac{dX}{dt} = AX + BU \ ,$$

where X represents a state variable matrix for all energy-storage elements in the HVDC system, X has a dimension of n, and elements in X comprises a capacitor voltage and an inductor current; A represents a state matrix of the HVDC system, B represents an input matrix of the HVDC system, and U represents an input variable matrix of the HVDC system.

In step 102, parameters in the HVDC system are scanned based on the impedance model, to obtain a feasible region of each of the parameters.

In an embodiment, all key parameters of the HVDC system are scanned by using the state space equation in step 101, and the feasible region of each of the key parameters is determined by using an eigenvalue method or impedance analysis method. The feasible regions are used as value ranges of respective parameters in subsequent DC loop impedance optimization.

In step 103, each of the parameters in the feasible region is substituted into a DC loop impedance equation, to obtain an impedance corresponding to the parameter. The DC loop impedance equation is obtained by transforming the impedance model.

It should be noted that, in step 103, the DC loop impedance corresponding to each parameter is calculated by substituting each parameter in the feasible region obtained in step 102 into the DC loop impedance equation obtained by transforming the state space equation obtained in step S101.

The DC link impedance equation is obtained by transforming the impedance model by using following method: letting U in step 101 be a series harmonic voltage source Vf applied to an inductance component loop in the DC loop, where a number of the inductance component in the state variable matrix is n0, then the DC loop impedance at the inductance component in the DC loop is:

$$Z_{dcn\ 0} = \frac{sI - A}{B}(n_0) \ .$$

In the above equation, s is a Laplacian operator, A is the state matrix of the HVDC system, and B is the input matrix of the HVDC system.

In step 104, the impedance corresponding to each of the parameters is compared with a target impedance value, and an impedance that meet the target impedance value and the corresponding parameter are determined as an optimal impedance and an optimal parameter of the DC loop.

Finally, the obtained DC loop impedance is compared with a design target (a target impedance value) requirement of the optimization, the impedance that meet the design requirement and the corresponding parameter are retained, and an impedance that do not meet the requirement is eliminated, to obtain the DC system parameter and the DC loop impedance that meet the design requirement.

A method for determining a DC loop impedance is provided according to this embodiment. First, an analytical calculation model of the DC loop impedance of the HVDC system is established, the feasible region of each of the parameters of the HVDC system is obtained based on the model, then the system parameter is selected in the feasible region by using an automatic optimization design method, and the system parameter and the optimal DC loop harmonic impedance that meet the target impedance value are outputted. This method can significantly improve the accuracy and efficiency of the DC loop impedance design of HVDC projects, avoid resonance in the DC system, and improve the stable operation of the power grid, so as to solve the technical problems of low efficiency and poor accuracy of existing DC loop impedance design methods.

The method for determining a DC loop impedance according to the first method embodiment of the present disclosure is described above. In the following, a method for determining a DC loop impedance according to a second method embodiment of the present disclosure is introduced.

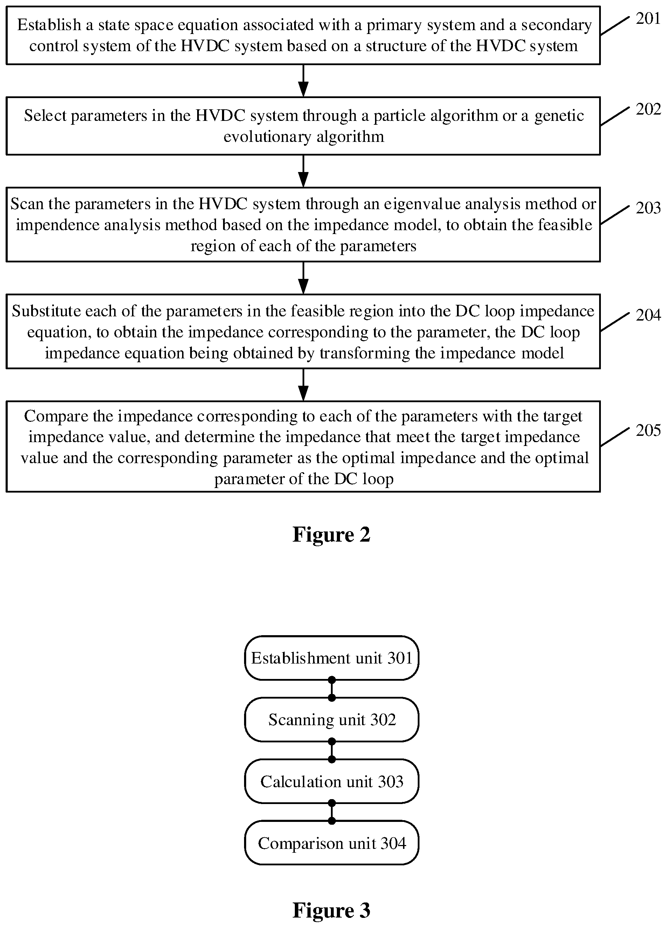

Reference is made to Figure 2, which is a flow chart of a method for determining a DC loop impedance according to another embodiment of the present disclosure.

The method for determining a DC loop impedance according to this embodiment includes the following steps 201 to 205.

In Step 201, a state space equation associated with a primary system and a secondary control system of the HVDC system is established based on a structure of the HVDC system.

Step 201 in this embodiment is similar to step 101 in the above embodiment. Reference may be made to the description of step 101 for detailed description, which will not be repeated here.

In step 202, parameters in the HVDC system are selected through a particle algorithm or a genetic evolutionary algorithm.

It should be noted that, when the quantity of parameters of the HVDC transmission system of which changes are to be considered is large or the parameters change in a large range, resulting in a large computation amount, intelligent algorithms such as particle swarm optimization or the genetic evolutionary algorithms may be used to optimize the selection of parameters, to improve efficiency.

The goal of the optimization may be set according to actual requirements of the HVDC transmission system. In a case that the goal is to minimize the resonance current, the impedance of the DC link in the sensitive frequency range needs to be as large as possible. In this case, the minimum DC impedance Zdcmin within the frequency range may be extracted, minimum DC loop impedances Zdcmins corresponding to different parameters of the HVDC transmission system are compared with each other, and the maximum one of the Zdcmins may be determined as the goal of system optimization. The DC link impedance of the DC system in the sensitive frequency range that is obtained through this optimization goal has the maximum impedance minimum point, such that the harmonic current is minimum even if resonance occurs at this frequency.

In a case that the optimization goal is to consider other characteristics such as dynamic response characteristics, a restrictive goal may be additionally set: for example, all impedances in the sensitive frequency range are greater than Zdc0 (if less than Zdc0, when resonance occurs at this frequency, the resonant current is large, which will endanger equipment safety). The system parameter range and DC impedance that are selected through this optimization method and that meet the requirements can ensure that the system does not have the risk of resonance under all working conditions. Then, further optimization may be performed based on the design goals required by the dynamic characteristics, to meet more system requirements.

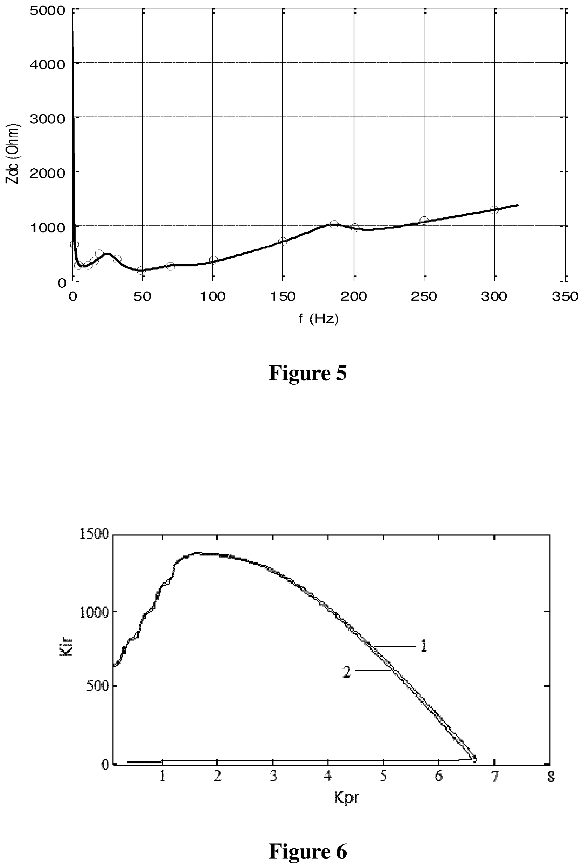

Reference is made to Figure 5, which is a diagram showing an initial impedance spectrum of a DC loop impedance at an output of a rectifier side of an HVDC transmission system according to the present disclosure.

The curve in Figure 5 is a spectrum of an impedance calculated by using the method according to the present disclosure, where each circular point represents an impedance at a frequency point calculated by PSCAD simulation. It can be known from Figure 5 that each circular point is on the impedance spectrum curve calculated by using the method of the present disclosure, which means that the impedance calculated by the method of present disclosure has high accuracy.

In step 203, the parameters in the HVDC system are scanned through an eigenvalue analysis method or impendence analysis method based on the impedance model, to obtain the feasible region of each of the parameters.

It should be noted that, it can be seen from Figure 5 that the impedance curve has low impedance value near 50Hz and 100Hz, and the two frequency points are more sensitive and resonance is prone to occur at the two frequency points. Therefore, the impedance near 50Hz and 100Hz may be optimized. The optimization process is described below.

The first step is to perform feasible region solving of the system parameters. For the convenience of explanation, rectifier side constant current controller parameters Kpr and Kir are used as the system parameters to be optimized. The feasible region solving of Kpr and Kir is performed by solving the state matrix A by using the eigenvalue analysis method. The feasible regions of Kpr and Kir that make the system stable may be obtained. As shown in Figure 6, the lower left half area surrounded by the curve is the feasible regions of the system parameters, where curve 1 represents Kpr and curve 2 represents Kir.

The second step is DC impedance optimization. First, the optimization goal is determined. For the convenience of explanation, the minimum DC impedance Zdcmin between 50Hz plus or minus 5Hz and 100Hz plus or minus 5Hz being the highest is determined as the optimization goal, that is, it is to ensure that the minimum DC impedance after optimization in the selected (45Hz, 55Hz) &&(95Hz, 105Hz) frequency band is greater than all other feasible minimum DC impedance, such that the resonance current in this frequency band is also the smallest and has the smallest impact on the system. The optimization target expression is as follows:

$$\max(\ Z_{dc\,\min}\ ),$$

and the system parameters obtained after optimization is as follows:

$$\begin{cases} K_{pr} = 1.5 \\ K_{ir} = 50 \end{cases}.$$

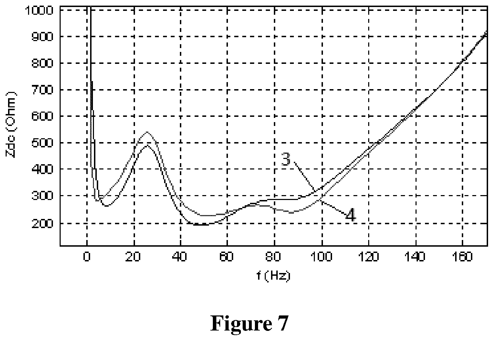

The optimized impedance curve is shown in Figure 7. Curve 4 is the optimized impedance curve, and curve 3 is the initial impedance curve. It can be seen that in the selected sensitive frequency band, the lowest point of curve 4 is above curve 3, which represents better resistance to DC resonance.

As can be seen from Figure 7, the method of this embodiment can achieve efficient optimization of the DC loop impedance of the HVDC system, adjust the system parameters that need to be optimized according to actual needs, and set different optimization goals, so that the DC loop impedance of the HVDC system meets different technical requirements. This method is efficient and reliable, and does not require repeated simulation calculations of the HVDC system through electromagnetic transient simulation or other software, and does not require designers with rich engineering experience to manually adjust the system parameters iteratively, thereby saving time and manpower, and improving the design efficiency and accuracy of the DC loop impedance of the HVDC system.

In step 204, each of the parameters in the feasible region is substituted into the DC loop impedance equation, to obtain the impedance corresponding to the parameter. The DC loop impedance equation is obtained by transforming the impedance model.

Step 204 in this embodiment is the same as step 103 in the above embodiment. Reference may be made the description of step 103 for detailed description, which will not be repeated here.

In step 205, the impedance corresponding to each of the parameters is compared with the target impedance value, and the impedance that meet the target impedance value and the corresponding parameter are determined as the optimal impedance and the optimal parameter of the DC loop.

Step 205 in this embodiment is the same as step 104 in the above embodiment. Reference may be made the description of step 104 for detailed description, which will not be repeated here.

With the method for determining a DC loop impedance according to this embodiment, the DC loop impedance does not need to be designed through electromagnetic transient simulation such as PSCAD, but is directly calculated through mathematical models, eliminating the lengthy modeling and simulation time required by electromagnetic transient software, and improving the calculation efficiency. In addition, and the method of the present disclosure is to perform a global solution within the feasible regions of the system parameters. The optimal system parameters and DC loop impedance are obtained while meeting the optimization goals under the premise of system stability, avoiding insufficient consideration or insufficient optimization in manual iterative design. Therefore, the obtained DC loop impedance has higher accuracy. Further, the present disclosure provides parametric analytical optimization design of the DC loop impedance according to different optimization design goals, and the optimization process can be performed automatically through computers, without the need for professional designers to repeatedly adjust and iterate system parameters, saving manpower and time, thus solving the problem of low efficiency and low accuracy of existing DC loop impedance design methods.

The method for determining a DC loop impedance according to the second method embodiment of the present disclosure is described above. In the following, a system for determining a DC loop impedance according to an embodiment of the present disclosure is introduced.

Reference is made to Figure 3, which is a schematic structural diagram of a system for determining a DC loop impedance according to an embodiment of the present disclosure.

The system for determining a DC loop impedance according to this embodiment includes an establishment unit 301, a scanning unit 302, a calculation unit 303 and a comparison unit 304.

The establishment unit 301 is configured to establish an impedance model for a DC loop of an HVDC system.

The scanning unit 302 is configured to scan parameters in the HVDC system based on the impedance model, to obtain a feasible region of each of the parameters.

The calculation unit 303 is configured to, for each of the parameters, substitute the parameter in the feasible region into a DC loop impedance equation, to obtain an impedance corresponding to the parameter, the DC loop impedance equation being obtained by transforming the impedance model.

The comparison unit 304 is configured to, for each of the parameters, compare the impedance corresponding to the parameter with a target impedance value, and determine the impedance that meets the target impedance value and the parameter corresponding to the impedance as an optimal impedance and an optimal parameter of the DC loop.

A system for determining a DC loop impedance is provided according to this embodiment. First, an analytical calculation model of the DC loop impedance of the HVDC system is established, the feasible region of each of the parameters of the HVDC system is obtained based on the model, then the system parameter is selected in the feasible region by using an automatic optimization design method, and the system parameter and the optimal DC loop harmonic impedance that meet the target impedance value are outputted. This method can significantly improve the accuracy and efficiency of the DC loop impedance design of HVDC projects, avoid resonance in the DC system, and improve the stable operation of the power grid, so as to solve the technical problems of low efficiency and poor accuracy of existing DC loop impedance design methods.

Those skilled in the art can clearly understand that for the convenience and simplicity of description, the specific working process of the system unit described above can be referred to the corresponding process in the foregoing method embodiment, and will not be described again here.

In the specification and the accompanying drawings of this application, the terms "first", "second", "third", "fourth", and the like (if existing) are intended to distinguish between similar objects rather than describe a specific sequence or a precedence order. Data used in this way is interchangeable in a suitable case, so that the embodiments of the present disclosure described herein can be implemented in a sequence in addition to the sequence shown or described herein. Moreover, the terms "include," "comprise", and any other variants thereof mean are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It should be understood that in the present disclosure, the term "at least one" refers to a quantity equal to one or more, and the term "multiple" refers to a quantity equal to two or more. The term "and/or" is used to describe an association relationship between objects, and indicates three possible relationships. For example, "A and/or B" may indicate a case that there is only A, a case that there is only B, and a case that there are both A and B. In each case, a quantity of A may be one or more, and a quantity of B may be one or more. The symbol "/" generally indicates that a former object and a latter object are associated by an "or" relationship. The term "at least one of" or a similar expression refers to "any combination of", including any combination consisting of a single item or multiple items. For example, at least one of a, b, or c may indicate: a, b, c, "a and b", "a and c", "b and c", or "a, b, and c", where a, b, and c may be singular or plural.

In the several embodiments provided in the present disclosure, the disclosed system, apparatus, and method may be implemented in other manners. For example, the described apparatus embodiment is merely exemplary. For example, the unit division is merely a logical function division and may be other division during actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electric, mechanical, or other forms.

The above unit described as a separate component may be or may be not separated physically. The component displayed as a unit may be or may be not a physical unit, that is, may be located at one place or may be distributed on multiple network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units may be integrated into one unit. The integrated units may be implemented in a form of hardware or in a form of a software functional unit.

When the integrated unit is implemented in the form of a software functional unit and sold or used as an independent product, the integrated unit may be stored in a computer-readable storage medium. Based on this understanding, the technical solution of the present disclosure is essentially or part of the technical solution that make contribution to the prior art or all or part of the technical solution may be embodied in the form of a software product, and the computer software product is stored in a storage medium, including several instructions for enabling a computer device (which may be a personal computer, a server, or a network device, etc.) to execute all or part of the steps of the method described in the various embodiments of the present disclosure. The above-described storage medium includes: a USB disk, a removable hard disk, a read-only memory (ROM), a random access memory (RAM), a diskette, an optical disc and various media that can store program codes.

The foregoing embodiments are merely intended for describing the technical solutions of the present disclosure, but not for limiting the present disclosure. It is to be understood by a person of ordinary skill in the art that although the present disclosure has been described in detail with reference to the foregoing embodiments, modifications can be made to the technical solutions described in the foregoing embodiments, or equivalent replacements can be made to some technical features in the technical solutions, as long as such modifications or replacements do not cause the essence of corresponding technical solutions to depart from the spirit and scope of the technical solutions of the embodiments of the present disclosure.

## Claims

1. A method for determining a direct current, DC, loop impedance, comprising:

   establishing an impedance model for a DC loop of a high-voltage direct current, HVDC, system;
   scanning parameters in the HVDC system based on the impedance model, to obtain a feasible region of each of the parameters;
   substituting, for each of the parameters, the parameter in the feasible region into a DC loop impedance equation, to obtain an impedance corresponding to the parameter, the DC loop impedance equation being obtained by transforming the impedance model; and
   comparing, for each of the parameters, the impedance corresponding to the parameter with a target impedance value, and determining the impedance that meets the target impedance value and the parameter corresponding to the impedance as an optimal impedance and an optimal parameter of the DC loop.

2. The method for determining a DC loop impedance according to claim 1, wherein after the establishing an impedance model for a DC loop of an HVDC system, the mothed further comprises:
   selecting the parameters in the HVDC system by using a particle algorithm or a genetic evolutionary algorithm.

3. The method for determining a DC loop impedance according to claim 1, wherein the establishing an impedance model for a DC loop of an HVDC system comprises:
establishing a state space equation associated with a primary system and a secondary control system of the HVDC system based on a structure of the HVDC system.

4. The method for determining a DC loop impedance according to claim 1, wherein the scanning parameters in the HVDC system based on the impedance model, to obtain a feasible region of each of the parameters comprises:
   scanning, by using an eigenvalue analysis method or impendence analysis method, the parameters in the HVDC system based on the impedance model, to obtain the feasible region of each of the parameters.

5. The method for determining a DC loop impedance according to claim 3, wherein the state space equation is expressed as:

$$\frac{dX}{dt} = AX + BU \ ,$$

   wherein X represents a state variable matrix for all energy-storage elements in the HVDC system, X has a dimension of n, and elements in X comprises a capacitor voltage and an inductor current, and
   wherein A represents a state matrix for the HVDC system, B represents an input matrix for the HVDC system, and U represents an input variable matrix for the HVDC system.

6. The method for determining a DC loop impedance according to claim 1, wherein the DC loop impedance equation is expressed as:

$$Z_{dcn\ 0} = \frac{sI - A}{B}(n_0) \ ,$$

   wherein s represents a Laplacian operator, A represents a state matrix of the HVDC system, and B represents an input matrix of the HVDC system.

7. A system for determining a direct current, DC, loop impedance, comprising:

   an establishment unit configured to establish an impedance model for a DC loop of a high-voltage direct current, HVDC, system;
   a scanning unit configured to scan parameters in the HVDC system based on the impedance model, to obtain a feasible region of each of the parameters;

a calculation unit configured to, for each of the parameters, substitute the parameter in the feasible region into a DC loop impedance equation, to obtain an impedance corresponding to the parameter, the DC loop impedance equation being obtained by transforming the impedance model; and

a comparison unit, configured to, for each of the parameters, compare the impedance corresponding to the parameter with a target impedance value, and determine the impedance that meets the target impedance value and the parameter corresponding to the impedance as an optimal impedance and an optimal parameter of the DC loop.

8. The system for determining a DC loop impedance according to claim 7, further comprising a selection unit configured to:
   select the parameters in the HVDC system by using a particle algorithm or a genetic evolutionary algorithm.

9. The system for determining a DC loop impedance according to claim 7, wherein the establishment unit is configured to:
   establish a state space equation associated with a primary system and a secondary control system of the HVDC system based on a structure of the HVDC system.

10. The system for determining a DC loop impedance according to claim 7, wherein the scanning unit is configured to:
    scan, by using an eigenvalue analysis method or impedence analysis method, the parameters in the HVDC system based on the impedance model, to obtain the feasible region of each of the parameters.

Establish an impedance model of a DC loop of an HVDC system / 101

Scan parameters in the HVDC system based on the impedance model, to obtain a feasible region of each of the parameters / 102

Substitute, for each of the parameters, the parameter in the feasible region into a DC loop impedance equation, to obtain an impedance corresponding to the parameter, the DC loop impedance equation being obtained by transforming the impedance model / 103

Comparing, for each of the parameters, the impedance corresponding to the parameter with a target impedance value, and determining an impedance that meet the target impedance value and the corresponding parameter as an optimal impedance and an optimal parameter of the DC loop / 104

**Figure 1**

Establish a state space equation associated with a primary system and a secondary control system of the HVDC system based on a structure of the HVDC system ⟋ 201

Select parameters in the HVDC system through a particle algorithm or a genetic evolutionary algorithm ⟋ 202

Scan the parameters in the HVDC system through an eigenvalue analysis method or impendence analysis method based on the impedance model, to obtain the feasible region of each of the parameters ⟋ 203

Substitute each of the parameters in the feasible region into the DC loop impedance equation, to obtain the impedance corresponding to the parameter, the DC loop impedance equation being obtained by transforming the impedance model ⟋ 204

Compare the impedance corresponding to each of the parameters with the target impedance value, and determine the impedance that meet the target impedance value and the corresponding parameter as the optimal impedance and the optimal parameter of the DC loop ⟋ 205

**Figure 2**

Establishment unit 301

Scanning unit 302

Calculation unit 303

Comparison unit 304

**Figure 3**

**Figure 4**

**Figure 5**

**Figure 6**

**Figure 7**

## INTERNATIONAL SEARCH REPORT

| International application No. |
| --- |
| **PCT/CN2021/117926** |

**A.    CLASSIFICATION OF SUBJECT MATTER**

G06F 30/3947(2020.01)i;  G06F 30/398(2020.01)i;  G06N 3/00(2006.01)i

According to International Patent Classification (IPC) or to both national classification and IPC

**B.    FIELDS SEARCHED**

Minimum documentation searched (classification system followed by classification symbols)

G06F; G06N

Documentation searched other than minimum documentation to the extent that such documents are included in the fields searched

Electronic data base consulted during the international search (name of data base and, where practicable, search terms used)

CNABS; CNTXT; CNKI; 万方, WANFANG; 百度, BAIDU; DWPI; SIPOABS; VEN; IEEE: 直流, 换流器, 回路, 阻抗, 可行域, 模型, 谐振, 最优, 迭代, direct current, loop, impedance, converter, parameter, optimal, optimization target, iterative, design

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 112231935 A (CHINA SOUTH POWER GRID ELECTRIC POWER RESEARCH INSTITUTE CO., LTD. et al.) 15 January 2021 (2021-01-15)<br>    description, paragraphs [0002]-[0102], and figures 1-8 | 1-10 |
| Y | CN 104570065 A (CHINA PETROLEUM & CHEMICAL CORPORATION et al.) 29 April 2015 (2015-04-29)<br>    description, paragraphs [0007]-[0046] | 1-10 |
| PX | CN 113111623 A (CHINA SOUTH POWER GRID ELECTRIC POWER RESEARCH INSTITUTE CO., LTD. et al.) 13 July 2021 (2021-07-13)<br>    claims 1-10 | 1-10 |
| A | CN 107688722 A (TSINGHUA UNIVERSITY) 13 February 2018 (2018-02-13)<br>    entire document | 1-10 |
| A | CN 103427433 A (ZHEJIANG UNIVERSITY) 04 December 2013 (2013-12-04)<br>    entire document | 1-10 |
| A | WO 2021012298 A1 (NORTHEASTERN UNIVERSITY) 28 January 2021 (2021-01-28)<br>    entire document | 1-10 |
| A | WO 2019002626 A1 (HOLST, D.) 03 January 2019 (2019-01-03)<br>    entire document | 1-10 |

☐ Further documents are listed in the continuation of Box C.        ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 November 2021** | **14 December 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**EP 4 332 821 A1**

INTERNATIONAL SEARCH REPORT
Information on patent family members

| International application No. |
| --- |
| **PCT/CN2021/117926** |

| Patent document cited in search report | | | Publication date (day/month/year) | Patent family member(s) | | | Publication date (day/month/year) |
| --- | --- | --- | --- | --- | --- | --- | --- |
| CN | 112231935 | A | 15 January 2021 | None | | | |
| CN | 104570065 | A | 29 April 2015 | CN | 104570065 | B | 03 May 2017 |
| CN | 113111623 | A | 13 July 2021 | None | | | |
| CN | 107688722 | A | 13 February 2018 | CN | 107688722 | B | 10 March 2020 |
| CN | 103427433 | A | 04 December 2013 | CN | 103427433 | B | 24 June 2015 |
| WO | 2021012298 | A1 | 28 January 2021 | EP | 3817177 | A1 | 05 May 2021 |
| | | | | CN | 110401231 | A | 01 November 2019 |
| WO | 2019002626 | A1 | 03 January 2019 | None | | | |